# EUROPÄISCHE PATENTSCHRIFT

(11) **EP 2 981 384 B1**
(45) Veröffentlichungstag und Bekanntmachung des Hinweises auf die Patenterteilung: **08.11.2023**
(21) Anmeldenummer: 14717422.1
(22) Anmeldetag: 31.03.2014
(51) Int. Cl.: B23B 31/117, B23Q 11/10

(54) **WERKZEUGAUFNAHME MIT SCHLITZEN**
TOOL HOLDER WITH SLITS
PORTE-OUTIL AVEC RAINURES

(30) Priorität: 05.04.2013 DE 102013103427
(43) Veröffentlichungstag der Anmeldung: 10.02.2016
(73) Patentinhaber: Franz Haimer Maschinenbau KG, 86568 Hollenbach-Igenhausen (DE)
(72) Erfinder: HAIMER, Franz, 86568 Igenhausen (DE)
(74) Vertreter: Charrier Rapp & Liebau
(86) Internationale Anmeldenummer: PCT/EP2014/056481
(87) Internationale Veröffentlichungsnummer: WO 2014/161825

(56) Entgegenhaltungen:
- DE-A1- 10 244 759
- DE-A1-102005 013 483
- DE-A1-102007 041 937
- US-A- 4 721 423
- US-A1- 2002 094 250
- US-B1- 6 315 506
- US-B1- 7 217 072
- US-B2- 6 443 462

## Beschreibung

Die Erfindung betrifft eine Werkzeugaufnahme zur kraftschlüssigen Halterung eines drehbaren Werkzeugs, insbesondere eines Bohr-, Fräs- oder Reibwerkzeugs, nach dem Oberbegriff des Anspruchs 1.

Eine derartige Werkzeugaufnahme ist aus der Figur 24 der US 6,315,506 B1 bekannt.

Aus der DE 100 65 383 A1 sind in einem radial innen gelegenen Umfangsteil eines vorderen Spannbereichs eines Aufnahmekörpers mehrere den radialen Wärmeleitquerschnitt mindernde Schlitze bzw. Aussparungen vorgesehen. Durch derartige Schlitze wird die durch Erwärmung erreichte Dehnung des vorderen Spannbereichs verbessert und im Spannbereich des Aufnahmekörpers muss weniger Material erwärmt werden, um die zum Einsetzen der Werkzeuge notwendige Aufweitung zu erreichen. Da das für die Aufweitung wesentliche Material an der Außenseite liegt, ist auch ein geringerer Wärmeeintrag bzw. eine schnellere Aufweitung durch die von außen einwirkende Erwärmung möglich. Dadurch können die Werkzeugaufnahmen auch kleiner dimensioniert werden. Allerdings ist die Fertigung derartiger Schlitze gerade bei kleinen Werkzeugaufnahmen relativ aufwendig, da diese aufgrund der üblicherweise vorhandenen Gewindeanschlüsse für Kühlmittelübergaberohre oder andere Anschlussteile einer inneren Kühlmittelzuführung nicht vollständig durchgezogen werden können.

Aufgabe der Erfindung ist es, eine Werkzeugaufnahme der eingangs genanten Art zu schaffen, die eine einfachere Fertigung ermöglicht.

Diese Aufgabe wird durch eine Werkzeugaufnahme mit den Merkmalen des Anspruchs 1 gelöst. Zweckmäßige Weiterbildungen und vorteilhafte Ausgestaltungen der Erfindung sind in den Unteransprüchen angegeben.

Bei der erfindungsgemäßen Werkzeugaufnahme ist in einer Aufnahme des Aufnahmekörpers ein separater Einsatz befestigt. Dadurch können zunächst die Schlitze ohne Rücksicht auf Gewinde oder andere Anschlussteile z.B. durch Drahterodieren oder andere geeignete Verfahren über die gesamte Länge des Spannbereichs durchgezogen werden. Nach der Fertigung der Schlitze kann der Einsatz in dem Aufnahmekörper montiert werden, so dass sich keine Beeinträchtigungen und Beschränkungen für die Lage und den Verlauf der Schlitze ergeben.

Der Einsatz weist einen Anschluss für ein Anschlussteil einer inneren Kühl- bzw. Schmiermittelzuführung auf. Dies ermöglicht in einfacher Weise die Anbindung von zum Teil auch normierten Kühl- bzw. Schmiermittelzuführungen. Es ist aber auch möglich einen Anschluss für eine Druckluftleitung oder dergleichen vorzusehen.

Der Radius der Aufnahme für den Einsatz ist größer als der größte Radius der Schlitze ausgeführt. Dadurch können die Schlitze auf einfache Weise von der Vorderseite des Aufnahmekörpers durch den gesamten Spannbereich hindurch bis zur Aufnahme durchgängig ohne Kollision mit Gewinden oder sonstigen Anschlüssen hergestellt werden.

Die Schlitze können parallel oder geneigt zur Drehachse des Aufnahmekörpers verlaufen.

Durch eine geneigte Anordnung kann die Kühlmittelzuführung über die Schlitze zu dem Schaft oder der Spitze des Werkzeugs geleitet werden.

Die Befestigung des Einsatzes im Aufnahmekörper kann über ein Gewinde erfolgen. Hierzu kann der Einsatz zweckmäßigerweise ein Außengewinde zum Eingriff in ein Innengewinde in der Aufnahme aufweisen. Der Einsatz kann aber auch eingeklebt, eingeschweißt, eingepresst oder auf andere geeignete Weise fest in dem Aufnahmekörper angeordnet sein.

Um die Montage des Einsatzes zu erleichtern kann der Einsatz eine spezielle Innenkontur mit Vertiefungen zum Eingriff eines Montagewerkzeugs aufweisen.

Zur abgedichteten Befestigung des Einsatzes im Aufnahmekörper kann an dem Einsatz mindestens eine Dichtlippe angeordnet sein. Die Dichtlippe kann in einer einfachen und vorteilhaften Ausführung durch eine Ringnut an einer vorderen Stirnseite des Einsatzes gebildet sein.

Die Aufnahmeöffnung kann einen unterschiedlichen Verlauf aufweisen. Sie kann z.B. einen im Wesentlichen gleichbleibenden Durchmesser aufweisen oder als gestufte Aufnahmeöffnung ausgeführt sein, um einen Verteilerraum für das zugeführte Kühlschmiermittel zu bilden.

Weitere Besonderheiten und Vorzüge der Erfindung ergeben sich aus der folgenden Beschreibung eines bevorzugten Ausführungsbeispiels anhand der Zeichnung. Es zeigen:
- **Figur 1**: ein erstes Ausführungsbeispiel einer Werkzeugaufnahme in einem Längsschnitt;
- **Figur 2**: ein zweites Ausführungsbeispiel einer Werkzeugaufnahme in einer zum Teil geschnittenen Perspektive;
- **Figur 3**: einen Einsatz der Werkzeugaufnahme von Figur 1 in einer Perspektive;
- **Figur 4**: den Einsatz von Figur 3 in einem Längsschnitt;
- **Figur 5**: eine vergrößerte Detailansicht des Bereichs D von Figur 4 und
- **Figur 6**: einen weiteren Einsatz der Werkzeugaufnahme in einer Perspektive, der nicht Teil der Erfindung ist.

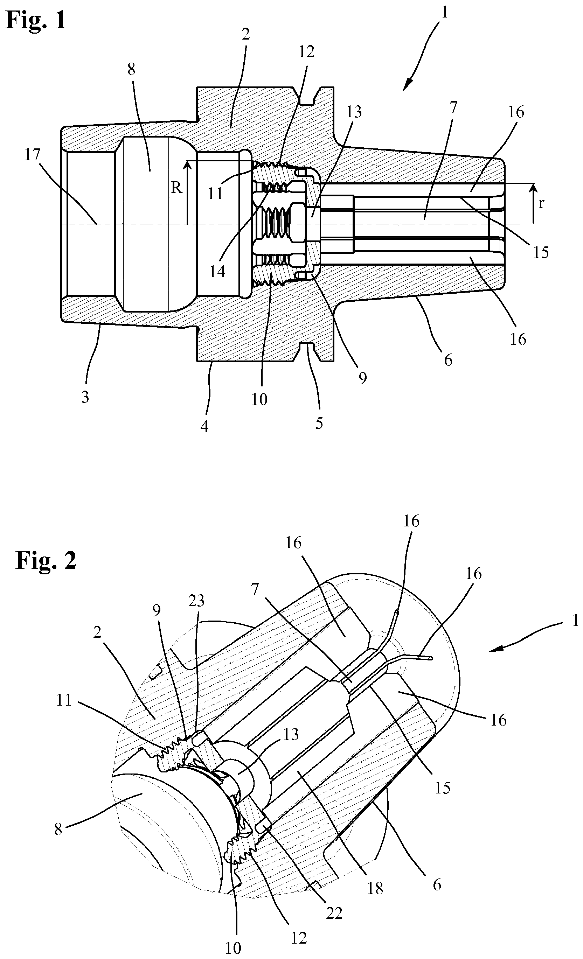

In Figur 1 ist eine hier mit einer HSK-Schnittstelle versehene Werkzeugaufnahme 1 zur kraftschlüssigen Halterung von Bohr-, Fräs-, Reibwerkzeugen oder anderen drehbaren Werkzeugen gezeigt. Die Werkzeugaufnahme 1 ist bei der gezeigten Ausführung als Schrumpffutter ausgebildet und enthält einen rotationssymmetrischen Aufnahmekörper 2, der einen konischen hinteren Teil 3 zur Aufnahme in einer Arbeitsspindel einer Werkzeugmaschine, einen zylindrischen mittleren Teil 4 mit einer Greiferrille 5 und einen vorderen Spannbereich 6 mit einer Aufnahmeöffnung 7 für einen Werkzeugschaft eines Werkzeugs aufweist. Bei der gezeigten Werkzeugaufnahme 1 kann der vordere Spannbereich 6 z.B. durch induktive Erwärmung erhitzt werden, wodurch sich der Innendurchmesser der Aufnahmeöffnung 7 vergrößert. Im erwärmten Zustand wird in die Aufnahmeöffnung 7 der Schaft des zu spannenden Werkzeugs eingeführt, wobei das Verhältnis des Innendurchmessers der Aufnahmeöffnung 7 zum Außendurchmesser des Werkzeugschafts derart ausgelegt ist, dass das Werkzeug beim anschließenden Abkühlen des Spannbereichs 6 fest in der Werkzeugaufnahme 1 gehalten wird.

Der Aufnahmekörper 2 weist zwischen einem hinteren Hohlraum 8 in dem konischen hinteren Teil 3 und der Aufnahmeöffnung 7 in dem vorderen Spannbereich 6 eine gegenüber der Aufnahmeöffnung 7 radial vergrößerte Aufnahme 9 für einen Einsatz 10 zur Befestigung eines Kühlmittelrohrs oder einer anderen geeigneten Kühlmittelzuführung auf. Die hier zylindrisch ausgebildete Aufnahme 9 enthält ein Innengewinde 11 für ein entsprechendes Außengewinde 12 an dem Einsatz 10. Über das Innengewinde 11 und das Außengewinde 12 kann der Einsatz 10 von der Rückseite des Aufnahmekörpers 2 durch den Hohlraum 8 hindurch in die Aufnahme 9 des Aufnahmekörpers 2 eingeschraubt werden. Der mit einer Durchgangsöffnung 13 versehenen Einsatz 10 enthält auch einen Anschluss 14, an dem ein Kühlmittelrohr oder eine andere geeigneten Kühlmittelzuführung angeschlossen werden kann. Bei der gezeigten Ausführung ist der Anschluss 14 in Form eines als Innengewinde ausgeführten Anschlussgewindes ausgebildet.

In dem vorderen Spannbereich 6 des Aufnahmekörpers 2 sind mehrere in Längsrichtung des Aufnahmekörpers 2 verlaufende und sich von einer Innenwand 15 der Aufnahmeöffnung 7 radial nach außen erstreckende Schlitze 16 angeordnet. Durch die Schlitze 16 muss weniger Material erwärmt werden, um die zum Einsetzen der Werkzeuge notwendige Aufweitung zu erreichen. Da das für die Aufweitung wesentliche Material an der Außenseite liegt, ist auch ein geringerer Wärmeeintrag bzw. eine schnellere Aufweitung durch die von außen einwirkende Erwärmung möglich. Gerade bei kleinen Werkzeugaufnahmen mit einem geringeren Volumen im Spannbereich kann so auch mit geringerer Erwärmung die notwendige Aufweitung erreicht werden. Bei der Bearbeitung kann über diese Schlitze 16 außerdem Kühlschmiermittel durch die Werkzeugaufnahme hindurch zum Werkzeug geleitet werden.

Die nach innen offenen Schlitze 16 laufen durch die gesamte Länge des vorderen Spannbereichs 6 von dem vorderen Ende des Aufnahmekörpers 2 bis zur Aufnahme 9 für den Einsatz 10 durch. Der äußere Radius r der Schlitze 16 ist geringer als der Radius R der im Querschnitt kreisrunden Aufnahme 9 für den Einsatz 10, so dass die Schlitze 16 ohne Rücksicht auf Gewinde oder andere Anschlussteile z.B. durch Drahterodieren oder andere geeignete Verfahren einfach hergestellt werden können. Erst nach der Fertigung der Schlitze 16 wird der Einsatz 10 mit dem als Innengewinde ausgebildeten Anschluss 14 in die Aufnahme 9 eingeschraubt. Bei der gezeigten Ausführung verlaufen die Schlitze 16 parallel zur Drehachse 17 des Aufnahmekörpers 2. Die Schlitze 16 können aber z.B. auch einen in Richtung des vorderen Endes nach innen geneigten Verlauf aufweisen, so dass das Kühlschmiermittel zum Schaft oder zur Spitze des Werkzeugs geleitet werden kann.

Die Aufnahmeöffnung 7 im vorderen Spannbereich 6 kann gemäß Figur 1 mit einem im Wesentlichen gleichbleibenden Innendurchmesser oder für Werkzeuge mit geringem Schaftdurchmesser als Stufenbohrung mit einem kleineren vorderen Innendurchmesser und einem größeren hinteren Innendurchmesser ausgeführt sein, wie dies in Figur 2 gezeigt ist. Durch den hinteren Bereich der Aufnahmeöffnung 7 mit dem vergrößerten Innendurchmesser kann ein Verteilerraum 18 für das über den Einsatz 10 zugeführte Kühlschmiermittel geschaffen werden.

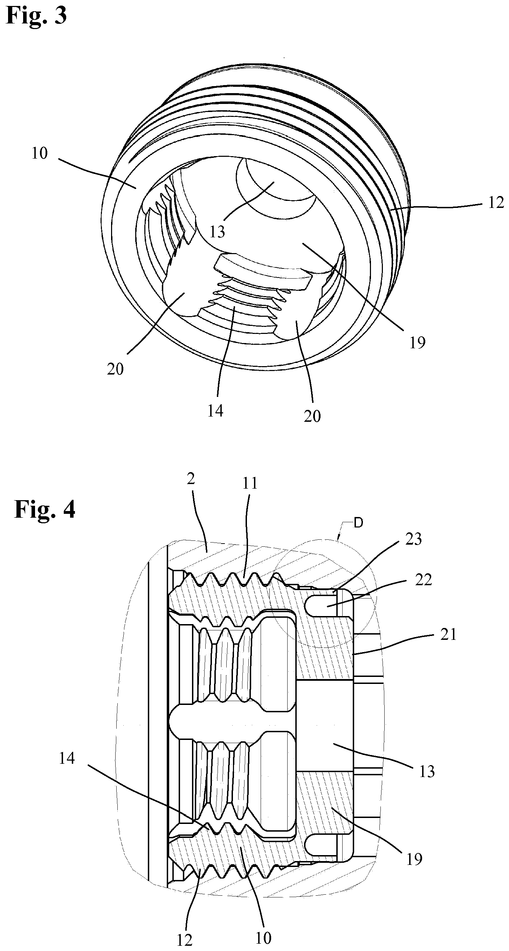

Wie besonders aus den Figuren 3 bis 5 hervorgeht, enthält der buchsenförmige Einsatz 10 eine innere Stirnwand 19, durch welche die Durchgangsöffnung 13 verläuft. Der Einsatz 10 weist neben dem Außengewinde 12 und dem als Innengewinde ausgeführten Anschluss 14 außerdem eine spezielle Innenkontur mit mehreren über den Umfang verteilten Vertiefungen 20 zum Eingriff eines Montagewerkzeugs auf. Durch das in die Vertiefungen 20 eingreifende Montagewerkzeug kann der Einsatz 10 in den Aufnahmekörper 2 eingeschraubt werden. Der als Innengewinde ausgebildete Anschluss 14 des Einsatzes 10 dient zum Einschrauben eines Kühlmittelübergaberohrs, durch das ein von einer Arbeitspindel einer Werkzeugmaschine eingeleiteter Kühlschmierstoff über die Schlitze 16 zum Werkzeug geführt werden kann.

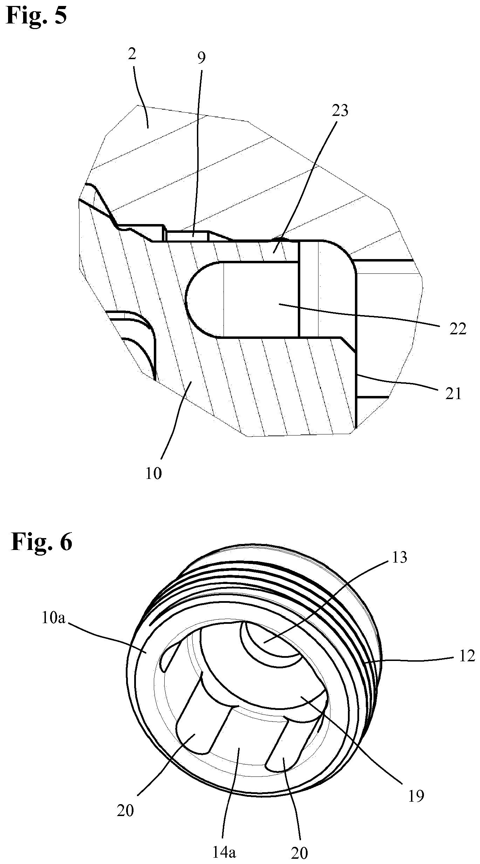

In den Figuren 4 und 5 ist erkennbar, dass sich an der zum vorderen Spannbereich 6 weisenden vorderen Stirnseite 21 des Einsatzes 10 eine Ringnut 22 mit einem äußeren Dichtsteg 23 befindet. Der Dichtsteg 23 ist in Radialrichtung flexibel und kann so eine radiale Abdichtung des Einsatzes 10 gegenüber dem Aufnahmekörper 2 gewährleisten. Eine Abdichtung kann aber auch über gesonderte Dichtringe oder andere Dichtelemente erreicht werden.

In der Figur 6 ist ein weiterer Einsatz 10a gezeigt, der nicht zur beanspruchten Erfindung gehört. Im Gegensatz zu dem Einsatz 10 aus der Figur 3 weist der Anschluss 14a kein Innengewinde auf, sondern ist als Bohrung ausgebildet, durch die Kühlmittel hindurch geleitet werden kann. Die weiteren Merkmale dieser Ausführungsform des Einsatzes 10a sind identisch zu dem Einsatz 10 und haben dementsprechend die gleichen Bezugszeichen.

In weiteren - hier nicht gesondert dargestellten - Ausführungen kann die Werkzeugaufnahme 1 auch als so genanntes Rollenkraftspannfutter oder als Dehnspannfutter ausgebildet sein. Die Erfindung ist selbstverständlich auch nicht auf HSK-Werkzeugaufnahmen beschränkt. An dem Aufnahmekörper 3 können in entsprechender Weise auch SK-, JIS-, BT-, ABS-, Capto- oder andere geeignete Schnittstellen vorgesehen sein.

## Patentansprüche

1. Werkzeugaufnahme (1) mit einem Aufnahmekörper (2), wobei der Aufnahmekörper (2) eine Drehachse (17), eine Schnittstelle hinten zur Aufnahme der Werkzeugaufnahme (1) in einer Arbeitsspindel einer Werkzeugmaschine und eine Aufnahmeöffnung (7) vorne zur kraftschlüssigen Halterung eines drehbaren Werkzeugs aufweist, wobei die Aufnahmeöffnung (7) sich von deren Innenwand (15) radial nach außen erstreckende und in Längsrichtung des Aufnahmekörpers (2) verlaufende Schlitze (16) enthält, wobei der Aufnahmekörper (2) einen in einer Einsatzaufnahme (9) befestigten Einsatz (10) enthält, wobei der Einsatz (10) mit einem Anschluss (14) für ein Anschlussteil einer inneren Kühlmittelzuführung oder Schmiermittelzuführung oder Druckluftleitung ausgebildet ist, so dass bei der Bearbeitung über die Schlitze (16) Kühlmittel bzw. Schmiermittel bzw. Druckluft durch die Werkzeugaufnahme (1) hindurch zum Werkzeug geleitet werden kann, wobei der Radius der Einsatzaufnahme (9) des Aufnahmekörpers (2) größer als der größte Radius r der Schlitze (16) ist, **dadurch gekennzeichnet, dass** der Anschluss (14) in Form eines als Innengewinde ausgeführten Anschlussgewindes ausgebildet ist.

2. Werkzeugaufnahme nach Anspruch 1, **dadurch gekennzeichnet, dass** die Schlitze (16) parallel oder geneigt zur Drehachse (17) des Aufnahmekörpers (2) verlaufen.

3. Werkzeugaufnahme nach einem der Ansprüche 1 oder 2, **dadurch gekennzeichnet, dass** der Einsatz (10) über eine Gewindeverbindung mit einem Außen- und Innengewinde (11, 12) lösbar in der Einsatzaufnahme (9) des Aufnahmekörpers (2) befestigt ist.

4. Werkzeugaufnahme nach einem der Ansprüche 1 bis 3, **dadurch gekennzeichnet, dass** der Einsatz (10) eine Innenkontur mit Vertiefungen (20) zum Eingriff eines Montagewerkzeugs enthält.

5. Werkzeugaufnahme nach einem der Ansprüche 1 bis 4, **dadurch gekennzeichnet, dass** an dem Einsatz (10) mindestens eine Dichtlippe (23) zur Abdichtung gegenüber dem Aufnahmekörper (2) angeordnet ist.

6. Werkzeugaufnahme nach Anspruch 5, **dadurch gekennzeichnet, dass** die Dichtlippe (23) durch eine Ringnut (22) an einer vorderen Stirnseite (21) des Einsatzes (10) gebildet ist.

7. Werkzeugaufnahme nach einem der Ansprüche 1 bis 6, **dadurch gekennzeichnet, dass** die Aufnahmeöffnung (7) einen im Wesentlichen gleichbleibenden Durchmesser oder einen stufenförmigen Verlauf aufweist.

## Claims

1. Tool receptacle (1) having a receptacle body (2), wherein the receptacle body (2) has an axis of rotation (17), has an interface at the rear for receiving of the tool receptacle (1) in a working spindle of a power tool, and has a receptacle opening (7) at the front for force-fitting retention of a rotatable tool, wherein the receptacle opening (7) contains slots (16) extending radially outwards from its inner wall (15) and running in a longitudinal direction of the receptacle body (2), wherein the receptacle body (2) contains an insert (10) which is fastened in an insert receptacle (9), wherein the insert (10) is formed with a connection (14) for a connection part of an inner coolant supply or lubricant supply or compressed-air line such that, during machining, coolant or lubricant or compressed air can be conducted through the tool receptacle (1) to the tool via the slots (16), wherein the radius of the insert receptacle (9) of the receptacle body (2) is greater than the maximum radius r of the slots (16), **characterized in that** the connection (14) is in the form of a connection thread that is formed as an inner thread.

2. Tool receptacle (1) according to Claim 1, **characterized in that** the slots (16) run parallel or inclined to the axis of rotation (17) of the receptacle body (2).

3. Tool receptacle (1) according to either of Claims 1 and 2, **characterized in that** the insert (10) is releasably fastened in the insert receptacle (9) of the receptacle body (2) via a threaded connection with an outer thread and inner thread (11, 12).

4. Tool receptacle (1) according to one of Claims 1 to 3, **characterized in that** the insert (10) contains an inner contour with depressions (20) for engagement of a fitting tool.

5. Tool receptacle (1) according to one of Claims 1 to 4, **characterized in that**, on the insert (10), there is arranged at least one sealing lip (23) for sealing off with respect to the receptacle body (2).

6. Tool receptacle (1) according to Claim 5, **characterized in that** the sealing lip (23) is formed by an annular groove (22) on a front end face (21) of the insert (10).

7. Tool receptacle (1) according to one of Claims 1 to 6, **characterized in that** the receptacle opening (7) has a substantially constant diameter or a stepped profile.

## Revendications

1. Logement d'outil (1) avec un corps de logement (2), le corps de logement (2) présentant un axe de rotation (17), une interface à l'arrière pour le logement du logement d'outil (1) dans une broche de travail d'une machine-outil et une ouverture de logement (7) à l'avant pour le maintien à force d'un outil rotatif, l'ouverture de logement (7) contenant des fentes (16) s'étendant radialement vers l'extérieur depuis sa paroi intérieure (15) et s'étendant dans la direction longitudinale du corps de logement (2), le corps de logement (2) contenant un insert (10) fixé dans un logement d'insert (9), l'insert (10) étant configuré avec un raccord (14) pour une partie de raccordement d'une amenée de fluide de refroidissement ou d'une amenée de lubrifiant ou d'une conduite d'air comprimé intérieure, de telle sorte que, lors de l'usinage, les fentes (16) permettent d'acheminer du fluide de refroidissement ou du lubrifiant ou de l'air comprimé à travers le logement d'outil (1) vers l'outil, le rayon du logement d'insert (9) du corps de logement (2) étant supérieur au rayon maximal r des fentes (16), **caractérisé en ce que** le raccord (14) est configuré sous la forme d'un filetage de raccordement réalisé sous forme de filetage intérieur.

2. Logement d'outil selon la revendication 1, **caractérisé en ce que** les fentes (16) s'étendent parallèlement ou de manière inclinée par rapport à l'axe de rotation (17) du corps de logement (2).

3. Logement d'outil selon l'une quelconque des revendications 1 ou 2, **caractérisé en ce que** l'insert (10) est fixé de manière amovible dans le logement d'insert (9) du corps de logement (2) par l'intermédiaire d'une liaison filetée avec un filetage extérieur et intérieur (11, 12).

4. Logement d'outil selon l'une quelconque des revendications 1 à 3, **caractérisé en ce que** l'insert (10) contient un contour intérieur avec des renfoncements (20) pour l'engagement d'un outil de montage.

5. Logement d'outil selon l'une quelconque des revendications 1 à 4, **caractérisé en ce qu'**au moins une lèvre d'étanchéité (23) est agencée sur l'insert (10) pour assurer l'étanchéité par rapport au corps de logement (2).

6. Logement d'outil selon la revendication 5, **caractérisé en ce que** la lèvre d'étanchéité (23) est formée par une rainure annulaire (22) sur un côté frontal avant (21) de l'insert (10).

7. Logement d'outil selon l'une quelconque des revendications 1 à 6, **caractérisé en ce que** l'ouverture de logement (7) présente un diamètre essentiellement constant ou une forme étagée.
